# NEW EUROPEAN PATENT SPECIFICATION

(11) **EP 0 659 823 B2**
(45) Date of publication and mention of the opposition decision: **02.05.2003**
(45) Mention of the grant of the patent: 08.10.1997
(21) Application number: 94309337.7
(22) Date of filing: 14.12.1994
(51) Int. Cl.: C08L 23/10

(54) **Polypropylene resin composition and the film manufactured therefrom**
Polypropylenharzzusammensetzung und daraus hergestellter Film
Composition de polypropylène et pellicule à partir de cette composition

(30) Priority: 24.12.1993 JP 32664393
(43) Date of publication of application: 28.06.1995
(73) Proprietor: SUMITOMO CHEMICAL COMPANY LIMITED, Osaka-shi, Osaka 541-0041 (JP)
(72) Inventor: Ima, Seiichiro, Ichihara-shi (JP); Shiratani, Eisuke, 135 Iriyamazu, Ichihara-shi (JP); Satoh, Makoto, 135 Iriyamazu, Ichihara-shi (JP)
(74) Representative: Ablewhite, Alan James

(56) References cited:
- EP-A- 0 424 761
- EP-A- 0 447 652
- US-A- 4 782 110
- Römpp Chemie Lexikon, 9. Auflage (1991), p. 2652

## Description

The present invention relates to a polypropylene resin composition and the film manufactured therefrom. More specifically, it relates to a polypropylene resin composition which can provide a film having a good balance between transparency, and blocking resistance without deteriorating the good appearance inherent to polypropylene films, and to the film manufactured by using such a polypropylene resin composition.

Polyolefin films have a vast variety of uses. For example, they are widely used as materials for packaging various goods, including foods. In particular, polypropylene films have a high marketable value by virtue of their desirable physical properties. However, polypropylene films are disadvantageous in packaging, since they undergo so-called blocking, i.e., undesirable cohesion of the films. In order to prevent the blocking of the films, a fine powder of silica is usually incorporated into the polypropylene films. EP-A-0447652 discloses a stretchable polypropylene film which contains polymerised isobutyl methacrylate and methyl methacrylate, which act as anti-blocking agents.

On the other hand, it is known in the art that polyolefins are obtained by polymerizing an α-olefin in the presence of certain catalysts such as a system containing titanium trichloride and an organo-aluminum compound. However, the conventional catalyst systems used in industry exhibit a low polymerization activity. Moreover, polypropylenes produced by the use of such catalyst systems have a low stereoregularity. They are obtained in the form of powder, which has a small average particle diameter, a wide particle size distribution and a high content of fine particles. As a result, the powder undesirably has a large surface area and a low apparent density.

In these circumstances, various attempts have been made to develop a high activity catalyst which has a high polymerization activity and affords polyolefins having high stereoregularity, for example, as disclosed in JP-A-47-34478, JP-A-49-59094, JP-A-50-126590 and JP-A-50-123182. As the performance of olefin polymerization catalysts is enhanced toward higher stereoregularity and higher activity by such attempts, the produced polymer particles tend to have a larger average particle diameter, narrower particle size distribution and greatly lowered content of fine particles. The development of such catalysts permits the polymer particles produced to have a small surface area and high apparent density; the particles being easily handled and free from the troubles in production process caused by generation of dust (specifically, dust explosion). However, the use of the catalysts undesirably causes visually observable fine spots on the surface of the film manufactured from the polymer particles, which are attributed to the non-uniform dispersion of the antiblocking agent used with the catalysts.

To overcome the disadvantage, JP-A-57-18747 and JP-A-58-225142 propose processes for making a film with a good transparency through improving the uniformity of dispersion of antiblocking agent, which comprises mixing propylene polymer particles containing 0.02% by weight of particles 100 µ or less in diameter and 0.1% by weight of particles 1,200 µ or more in diameter, a specific inorganic fine powder and fatty acid salt as dispersing auxiliaries, and a small amount of silicon dioxide in a specific ratio. JP-A-57-3840 proposes a process which comprises mixing silicon dioxide and a polyolefin having an average particle diameter of 200-800 µm and containing fine particles having a particle diameter of 100 µm or less in a content of 0.1% by weight or less, with a Henschel mixer at 50°C or above, and incorporating an organic acid amide into the resulting mixture. In these processes, as the performance (stereoregularity and activity) of the olefin polymerization catalyst used improves, the average particle diameter of the resulting polymer particles becomes greater. However, when the average particle diameter of the propylene polymer particles exceeds 600 µm or so, these processes are unsatisfactory for attaining uniform dispersion of the antiblocking agent. EP-A-042 761 discloses a heat-laminatable multilayer film with enhanced transparency, consisting of layers of polyolefin and polypropylene with only the central layer containing an anti-blocking additive.

The object of the present invention is to develop a polypropylene resin composition which can provide a film having a good balance between transparency and blocking resistance without deteriorating the good appearance inherent to polypropylene film, which has not been obtained by the prior techniques as mentioned above, by using a propylene polymer having a large average particle diameter produced by using a high activity catalyst.

After extensive study in view of such situations, the present inventors have found that the aforesaid object can be attained by compounding a polypropylene having a large average particle diameter with a crosslinked polymer fine powder which is a crosslinked acrylic resin powder, and thus accomplishing the present invention.

According to the present invention, there are provided
a polypropylene resin composition which comprises:
(A) 100 parts by weight of propylene polymer particles having an average particle diameter of from 500 to 3,000 µm and containing fine particles having a diameter of 300 µm or less in a content of 5 percent by weight or less, and
(B) 0.05-25 parts by weight of a crosslinked acrylic resin powder having an average particle diameter of from 0.7 to 10 µm;
   a process for producing a polypropylene resin film comprising:
   (1) mixing (A) 100 parts by weight of particles of at least one propylene polymer which have an average particle diameter of from 500 to 3,000 µm and contain fine particles having a diameter of 300 µm or less in a content of 5 percent by weight or less and (B) 0.05-0.5 part by weight of a crosslinked acrylic resin powder having an average particle diameter of from 0.7 to 10 µm to obtain a polypropylene resin composition, and
   (2) forming the composition into a polypropylene resin film.

The propylene polymer particles used in the present invention are preferably the particles of a crystalline polypropylene. The crystalline polypropylene is a propylene homopolymer or a copolymer of propylene, with at least one α-olefin other than propylene having up to 10 carbon atoms. The copolymer may be of a random copolymer or a block copolymer.

The α-olefins other than propylene which are copolymerizable with propylene include ethylene, butene-1, pentene-1, hexene-1, 4-methyl-1-pentene, and 3-methyl-1-butene.

The melt flow rate (MFR) of the propylene polymer used in the present invention falls within the range of from 0.5 to 50 g/10 min., preferably 1 to 30 g/10 min., more preferably 2 to 20 g/10 min.

In the present method, when the average particle diameter of the propylene polymer particles is 3,000 µm or more, the dispersion of the crosslinked polymer powders in the propylene polymer becomes poor.

The average particle diameter of propylene polymer particles is based on the weight-cumulative particle size distribution of the polymer particles measured with a particle size distribution measuring apparatus by laser diffraction method and is expressed in terms of median diameter. The average particle diameter of the propylene polymer particles used in the present invention, range from 500-3,000 µm.

The propylene polymer particles used in the present invention contain 5% by weight or less of fine particles of 300 µm or less. When the propylene polymer particles contain more than 5% by weight of such fine particles, the polymer is difficult to handle in processing and cause : dust explosions.

The application of a non-crosslinked polymer particles with low heat resistance to the present invention causes accumulation of deteriorated materials in an outlet of a die swell during film forming, which generates cuts in the line formed in the film.

Accordingly, it is necessary to increase the cleaning frequency of a die lip for removing the accumulated deteriorated materials. As a result, the operating efficiency of the film forming decreases In contrast, the polymer powder used in the present invention is a crosslinked acrylic resin powder which resists severe decomposition at the processing temperature of polypropylene. Also, preferably the acrylic resin powder, does not change shape extremely at the compounding or forming-processing of polypropylene.

The crosslinked acrylic resin powder of the present invention can be generally obtained as a copolymer of a radical copolymerizable acrylic compound having a vinyl group defined by the formula: 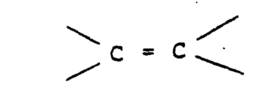 and a radical copolymerizable vinyl compound having at least two vinyl groups in the molecule as a crosslinking agent. For example, the radical copolymerizable acrylic compound includes acrylic acid, and methacrylic acid, and the glycidyl esters thereof.

The crosslinking agent includes, for example, divinylbenzene, trivinylbenzene, divinyl sulfonic acid, diacrylic acid ester of ethylene glycol, and dimethacrylic acid ester.

A refractive index of the crosslinked acrylic resin powder used in the present invention preferably falls within the range of from 1.45 to 1.55, more preferable 1.47 to 1.51, from the viewpoint of transparency of the film.

A preferred crosslinked acrylic type resin is a spherical crosslinked acrylic type resin.

The acrylic type resin includes, for example, homopolymer or copolymer of acrylic acid or ester derivatives of acrylic acid such a methylacrylate, ethylacrylate, and butylacrylate, and methacrylic acid or ester derivatives of methacrylic acid such as methylmethacrylate, ethylmethacrylate, and butylmethacrylate.

The crosslinked acrylic resin fine powder used in the present invention has an average particle diameter of 0.7-10 µm, preferably 1.0-5 µm, more preferably 1.5-4 µm, most preferably from 1.5 µm inclusive to 3 µm exclusive. When the average particle diameter of the crosslinked acrylic resin fine powder is less than 0.7 µm, the resulting film is unsatisfactory in blocking resistance, whereas when it exceeds 10 µm, the film is poor in appearance.

The average particle diameter of the cross-linked acrylic resin powder is based on the weight-cumulative particle size distribution measured by Coulter counter method and is expressed in terms of median diameter. The shape of the powder is observed with a scanning electron microscope.

The crosslinked acrylic resin powder used in the present invention,as mentioned above, can be obtained by the following conventional methods, for example:
(i) a method of crosslinking (a) a pulverized powder of a polymer obtained by a bulk polymerization, (b) a polymer powder obtained by polymerizing in an organic solvent having a solubility to the monomer to be polymerized and not having a solubility to the polymer, or (c) a polymer powder obtained by a slurry polymerization or an emulsion polymerization, by irradiation of radiation, electron beams, and ultraviolet rays,
(ii) a method of curing the polymer powder as mentioned above to obtain a crosslinked polymer powder and then pulverizing the crosslinked polymer powder,
(iii) a method of pulverizing a thermosetting resin,
(iv) a method of pulverizing a polymer obtained by a bulk radical polymerization together with crosslinkable vinyl monomers such as divinylbenzene, and trivinylbenzene, or by a condensation polymerization or addition polymerization together with a polyfunctional monomer,
(v) a method of directly obtaining a polymer powder by polymerization, slurry polymerization, or emulsion polymerization of the crosslinkable vinyl monomers or polyfunctional monomer as mentioned above.

The methods for producing the crosslinked polymer powder used in the present invention are not particularly restricted to the methods as mentioned above.

The polypropylene resin composition of the present invention may be incorporated, if necessary and desired, with conventional antioxidants, neutralizing agents, lubricants, and antistatic agents.

The polypropylene resin composition of the present invention contains 100 parts by weight of the propylene polymer particles and 1 to 25 parts by weight of the crosslinked acrylic resin powder which are mixed to obtain a master batch composition for making a polypropylene film.

A composition obtained by diluting the above master batch composition with a propylene polymer particles until the content of the crosslinked acrylic resin powder is reduced to 0.05 to 0.5 parts by weight per 100 parts by weight of the propylene polymer particles gives a polypropylene film having a good balance between transparency and blocking resistance without deteriorating the good appearance inherent to polypropylene film. The propylene polymer particles used for diluting the master batch composition may be the same as, or different from,the propylene polymer particles contained in the master batch composition.

Though the thickness of the film of the present invention is not particularly restricted, it is usually 300 µm or less, preferably 10-300 µm, more preferably 10-100 µm.

The present invention is described in detail below with references to the Examples.

The properties mentioned in the specification were measured in the following manner.

Melt flow rate (MFR) was determined according to JIS K7210, condition 14 (at 230°C under a load of 2.16 kg).

The average particle diameter of the crosslinked acrylic resin powder was based on the weight-cumulative particle size distribution of the powder, measured with a Coulter counter/multi-sizer and was expressed in terms of median diameter.

Average particle diameter of propylene polymer was based on the weight-cumulative particle size distribution of the polymer measured with an apparatus for measuring particle size distribution by laser diffraction method (HELOS-E/LA, a trade name) mfd. by JEOL under the following conditions and was expressed in terms of median diameter.

Focal length: 1,000 mm, measuring time; 2 sec.

Appearance: The number of fish eyes (FE) having a diameter of 200 µm or more were visually counted, and the appearance was judged good when the number of FE was about 10 or less per 1,000 cm² and judged poor when it was about 15 or more per 1,000 cm².

Haze was determined according to JIS K 7105.

Gloss: 45-Degree specular gloss was determined according to JIS K7105.

Blocking resistance: Two film sheets of 225 mm by 50 mm were placed one upon the other and an overlapped area of 100 mm by 50 mm of the sheets was conditioned under a load of 40 g/cm at 60°C for 3 hours. Thereafter, the conditioned overlapped film sheets were allowed to stand in an atmosphere of 23°C and 50% humidity for at least 30 minutes. Then, the strength requested for peeling the stored film sheets was determined at a peeling loading velocity of 20 g/min. using a blocking tester mfd. by Shimadzu Corp.

Scattering-transmitted light intensity (LSI): Determination was made with an LSI Tester (mfd. by Toyo Seiki Seisakusho Ltd.) by receiving scattering-transmitted light in the range of 1.2-3.6°.

### Example 1

Propylene polymer particles having an average particle diameter of 880 µm (the propylene polymer is hereinafter abbreviated as PP-1, Sumitomo Noblen® HW100G, melt flow rate: 8.4 g/10 min.) was used as the propylene polymer particles. 100 Parts by weight of the propylene polymer particles, 0.2 part by weight of Sumilizer® BHT, (a phenolic antioxidant, mfd. by Sumitomo Chemical Co., Ltd.), 0.1 part by weight of calcium stearate, 0.05 part by weight of Irganox® 1010 (a phenolic antioxidant mfd. by Ciba-Geigy Ltd.) and 0.3 part by weight of a crosslinked polymer powder (Epostar MA1002, crosslinked poly(methyl methacrylate) resin (spherical fine particles mfd. by NIPPON SHOKUBAI CO., LTD., refractive index: 1.49),were mixed in a Henschel mixer. The resulting mixture was melt-extruded at 220°C to obtain pellets. The pellets were melt-extruded with a water-cooled film blowing machine at a processing temperature of 205°C and then cooled with a cooling roll of 28°C to obtain a tubular film 30 µm in thickness. The film had a very good appearance, a haze of 1.4% and an LSI of 3.2%. The blocking resistance of the film was very good, that is, since the film sheets subjected to the blocking resistance test did not stick to each other.

### Comparative Example 1

The same procedure as in Example 1 was repeated except that the PP-1 particles were replaced by 100 parts by weight of propylene polymer particles having an average particle diameter of 860 µm (the propylene polymer is abbreviated as PP-2, Sumitomo Noblen® HW 100VG, melt flow rate: 9.6 g/10 min.) and the acrylic resin spherical fine powder (Epostar MA1002) was replaced by 0.3 part by weight of a silicon dioxide powder (Sylysia 350, mfd. by Fuji Silysia Chemical Ltd.; refractive index: 1.46). The properties of the film thus obtained are shown in Table 2.

### Example 2

100 Parts by weight of propylene-ethylenebutene-1 terpolymer particles having an average particle diameter of 910 µm (the terpolymer is abbreviated as RC-1, Sumitomo Noblen® TW150VG, ethylene content: 2.5% by weight, butene-1 content: 5.1% by weight, melt flow rate: 4.8 g/10 min.), 0.2 part by weight of Sumilizer® BHT, 0.1 part by weight of calcium stearate, 0.05 part by weight of Irganox® 1010 and 0.3 part by weight of Epostar MA1002 as the crosslinked polymer powder were mixed in a Henschel mixer. The mixture was melt-extruded at 220°C to obtain pellets. The pellets were melt-extruded through a single-layer T-die extruder at a die temperature of 250°C and then cooled with a cooling roll of 30°C to obtain a single layer film 30 µm in thickness. The properties of the film thus obtained are shown in Table 2.

### Comparative Example 2

The same procedure as in Example 2 was repeated except that the RC-1 particles were replaced by 100 parts by weight of propylene-ethylene-butene-1 terpolymer particles having an average particle diameter of 310 µm (the terpolymer is abbreviated as RC-2, Sumitomo Noblen® TW150, ethylene content: 2.1% by weight, butene-1 content: 5.6% by weight, melt flow rate: 7.1 g/10 min.) and Epostar MA1002 was replaced by 0.2 part by weight of Sylysia 350, mfd. by Fuji Silysia Chemical Ltd. The properties of the film thus obtained are shown in Table 2.

### Example 3

RC-1 particles was classified by using a JIS standard sieve with sieve openings of 1.0 mm to obtain propylene polymer particles having powder particle diameter of 1,000 µm or more (abbreviated as RC-3 particles; average particle diameter: 1,440 µm). Then, the same procedure as in Example 2 was repeated except that the RC-2 particles were replaced by 100 parts by weight of the RC-3 particles obtained above. The properties of the film thus obtained are shown in Table 2.

### Comparative Example 3

The same procedure as in Example 2 was repeated except that Eposter MA1002 was replaced by 0.3 part by weight of Eposter MA1013 (crosslinked poly(methyl methacrylate) resin spherical fine particles, refractive index: 1.49). The properties of the film thus obtained are shown in Table 2.

### Comparative Example 4

The same procedure as in Example 2 was repeated except that the RC-2 particles were replaced by 100 parts by weight of propylene-ethylene-butene-1 terpolymer pellets having an average particle diameter of 4,000 µm (the terpolymer is abbreviated as RC-4, Sumitomo Noblen® WF825, ethylene content: 2.0% by weight, butene-1 content: 4.6% by weight, melt flow rate: 6.5 g/10 min.). The properties of the film thus obtained are shown in Table 2. The film was poor in appearance, having a large number of fish eyes.

**Table 1**

| Polyolefin | MFR (g/10 min) | Average particle diameter (µm) | Particles having diameters of 300 µm or less (%) |
|---|---|---|---|
| PP-1 | 8.4 | 880 | 2.7 |
| PP-2 | 9.6 | 860 | 2.7 |
| RC-1 | 4.8 | 910 | 1.9 |
| RC-2 | 7.1 | 310 | 48.5 |
| RC-3 | 4.8 | 1440 | 1.1 |
| RC-4 | 6.5 | 4000 | 0.0 |
| | | | |

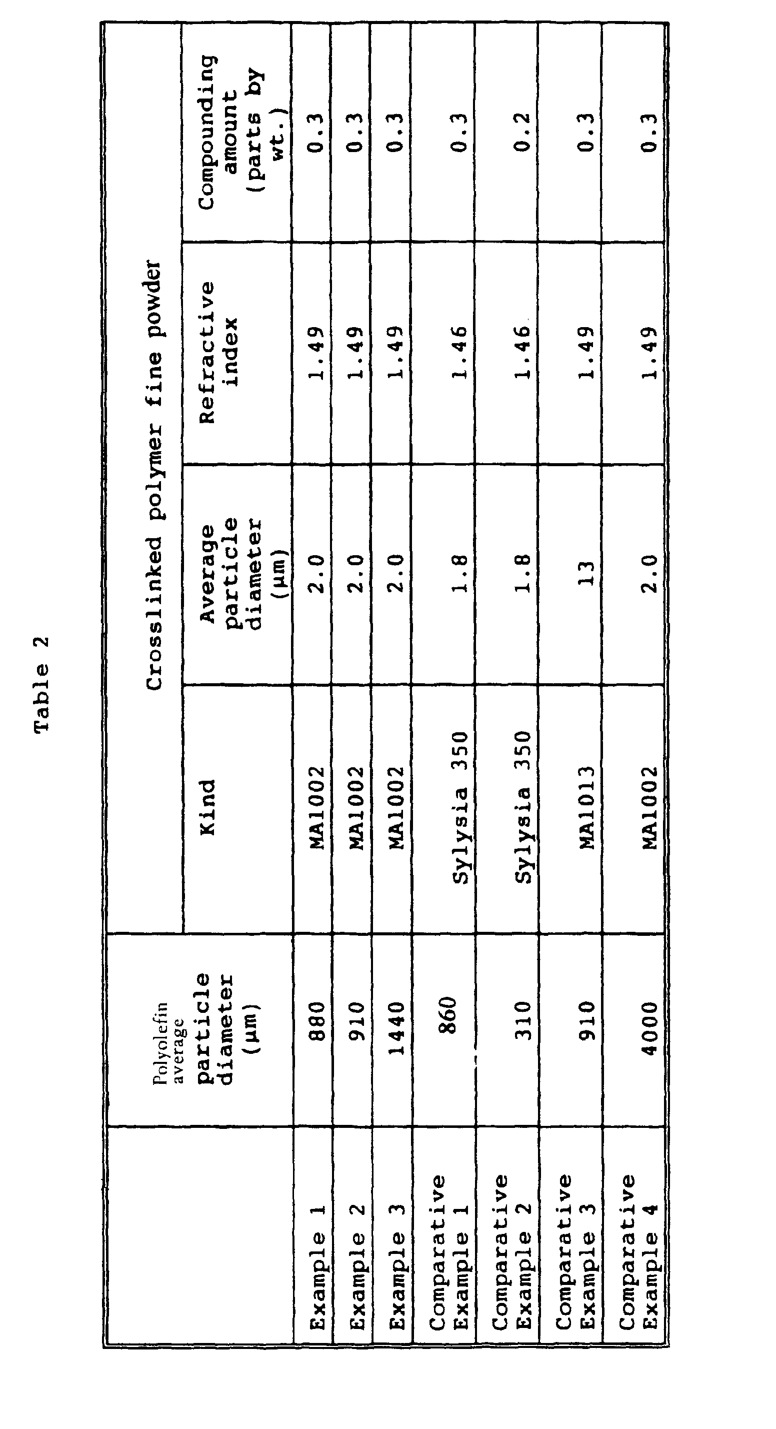

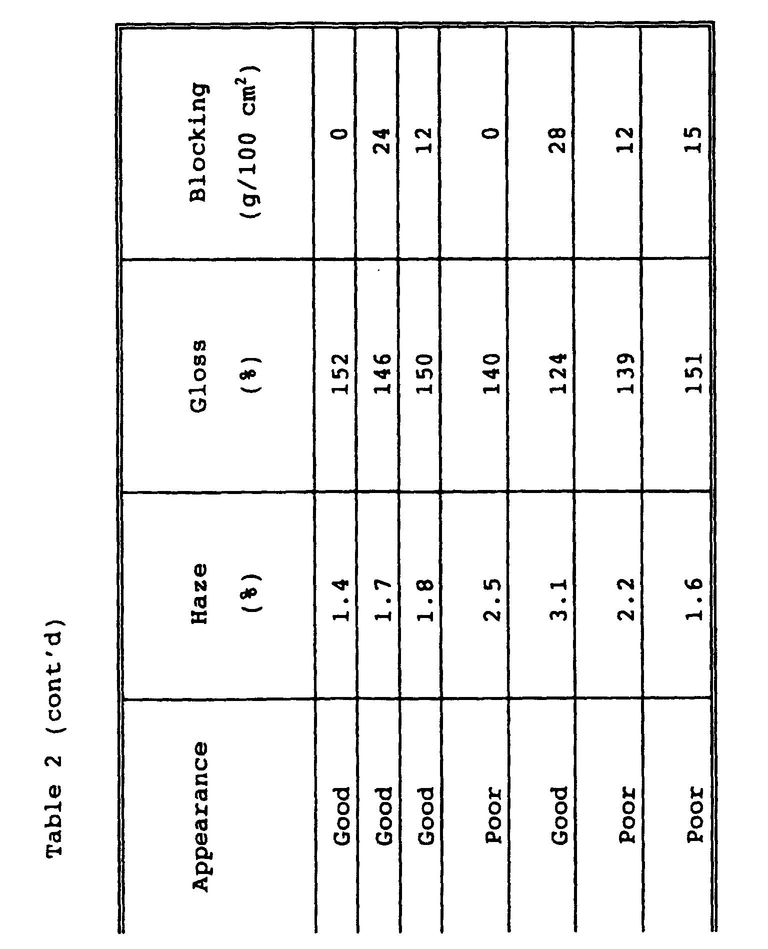

### Example 4

A mixture of 100 parts by weight of the RC-1 particles used as the propylene polymer particles, 0.15 part by weight of Irganox® 1010 and 20 parts by weight of Eposter MA1002 used as the crosslinked polymer powder were blended in a Henschel mixer and then melt-extruded at 200°C to obtain master batch pellets of the crosslinked polymer (the pellets are hereinafter abbreviated as MB-1). Then, a mixture of 1.5 parts by weight of the master batch pellets as an antiblocking agent and 98.5% by weight of the same propylene polymer particles as used in Example 1, 0.2% by weight of Sumilizer® BHT, 0.1% by weight of calcium stearate and 0.05% by weight of Irganox® 1010 was blended in a Henschel mixer and melt-extruded at 220°C to obtain pellets of the polypropylene resin composition. Thereafter, the same film extrusion procedure as in Example 2 was repeated except that the melt-extruded pellets in Example 2 was replaced by the pellets obtained above. The properties of the film thus obtained are shown in Table 3.

**Table 3**

| | Appearance | Haze | Gloss | Blocking (g/100 cm²) |
|---|---|---|---|---|
| Example 4 | Good | 1.4 | 148 | 33 |

According to the present invention, a polypropylene resin composition can be provided which gives a film having a good balance between transparency and blocking resistance without deteriorating the good appearance inherent to polypropylene films.

## Claims

1. A polypropylene resin composition which comprises:
(A) 100 parts by weight of propylene polymer particles having an average particle diameter of from 500 to 3,000 µm and containing fine particles having a diameter of 300 µm or less in a content of 5 percent by weight or less, and
(B) 0.05-25 parts by weight of a crosslinked acrylic resin powder having an average particle diameter of from 0.7 to 10 µm.

2. A composition according to Claim 1, wherein the crosslinked acrylic resin is a crosslinked poly(methyl methacrylate).

3. A composition according to Claim 1 or Claim 2, wherein the amount of the crosslinked acrylic resin powder ranges from 1 to 25 parts by weight.

4. A composition according to any of Claims 1 to 3, wherein the propylene polymer is selected from the group consisting of a propylene homopolymer and a copolymer of propylene with at least one α-olefin other than propylene having up to 10 carbon atoms.

5. A composition according to any of Claims 1 to 4, wherein the cross-linked acrylic resin has a refractive index of from 1.45 to 1.55.

6. Use of a composition according to any one of Claims 1 to 5 for manufacturing a film.

7. A process for producing a polypropylene resin film comprising:
(1) mixing (A) 100 parts by weight of particles of at least one propylene polymer which have an average particle diameter of from 500 to 3,000 µm and contain fine particles having a diameter of 300 µm or less in a content of 5 percent by weight or less and (B) 0.05-0.5 part by weight of a crosslinked acrylic resin powder having an average particle diameter of from 0.7 to 10 µm to obtain a polypropylene resin composition, and
(2) forming the composition into a polypropylene resin film.

8. A process according to Claim 7, wherein step (1) includes the steps of:
(i) mixing (A) 100 parts by weight of propylene polymer particles and (B) 1.0-25 parts by weight of the crosslinked acrylic resin powder to obtain a master batch composition, and
(ii) diluting the master batch composition with propylene polymer particles to obtain a polypropylene resin composition comprising (A) 100 parts by weight of particles of at least one propylene polymer and (B) 0.05-0.5 part by weight of the crosslinked acrylic resin powder, in which the propylene polymer particles used in step (i) and the propylene polymer particles used in step (ii) may be the same or different.

9. A process according to Claim 7 or Claim 8, wherein the cross-linked acrylic resin is a crosslinked poly(methyl methacrylate).

10. A process according to any of Claims 7 to 9, wherein the cross-linked acrylic resin has a refractive index of from 1.45 to 1.55.

11. A process according to any of Claims 7 to 10, wherein the film has a thickness of 300 µm or less.

## Patentansprüche

1. Polypropylenharzmasse, umfassend:
(A) 100 Gew.-Teile Propylenpolymerteilchen mit einem durchschnittlichen Teilchendurchmesser von 500 bis 3000 um, die Feinteilchen mit einem Durchmesser von 300 µm oder weniger in einem Gehalt von 5 Gew.-% oder weniger enthalten, und
(B) 0,05 bis 25 Gew.-Teile eines vernetzten Acrylharzpulvers mit einem durchschnittlichen Teilchendurchmesser von 0,7 bis 10 µm.

2. Masse nach Anspruch 1, wobei das vernetzte Acrylharz ein vernetztes Poly(methylmethacrylat) ist.

3. Masse nach Anspruch 1 oder Anspruch 2, wobei die Menge des vernetzten Acrylharzpulvers im Bereich von 1 bis 25 Gew.-Teilen liegt.

4. Masse nach einem der Ansprüche 1 bis 3, wobei das Propylenpolymer ausgewählt ist aus einem Propylenhomopolymer und einem Copolymer aus Propylen mit mindestens einem α-Olefin mit bis zu 10 Kohlenstoffatomen, welches von Propylen verschieden ist.

5. Masse nach einem der Ansprüche 1 bis 4, wobei das vernetzte Acrylharz einen Brechungsindex von 1,45 bis 1,55 aufweist.

6. Verwendung einer Masse nach einem der Ansprüche 1 bis 5 zur Herstellung einer Folie.

7. Verfahren zur Herstellung einer Polypropylenharzfolie, umfassend:
(1) Mischen von (A) 100 Gew.-Teilen Teilchen mindestens eines Propylenpolymers, die einen durchschnittlichen Teilchendurchmesser von 500 bis 3000 µm aufweisen und Feinteilchen mit einem Durchmesser von 300 µm oder weniger in einem Gehalt von 5 Gew.-% oder weniger enthalten, und (B) 0,05 bis 0,5 Gew.-Teilen eines vernetzten Acrylharzpulvers mit einem durchschnittlichen Teilchendurchmesser von 0,7 bis 10 µm zum Erhalt einer Polypropylenharzmasse, und
(2) Formen der Masse in eine Polypropylenharzfolie.

8. Verfahren nach Anspruch 7, wobei Schritt (1) folgende Schritte einschließt:
(i) Mischen von (A) 100 Gew.-Teilen Propylenpolymerteilchen und (B) 1,0 bis 25 Gew.-Teilen des vernetzten Acrylharzpulvers zum Erhalt einer Masterbatchmasse, und
(ii) Verdünnen der Masterbatchmasse mit Propylenpolymerteilchen zum Erhalt einer Polypropylenharzmasse, die (A) 100 Gew.-Teile Teilchen mindestens eines Propylenpolymers und (B) 0,05 bis 0,5 Gew.-Teile des vernetzten Acrylharzpulvers umfasst, wobei die in Stufe (i) verwendeten Propylenpolymerteilchen und die in Stufe (ii) verwendeten Propylenpolymerteilchen gleich oder verschieden sein können.

9. Verfahren nach Anspruch 7 oder Anspruch 8, wobei das vernetzte Acrylharz ein vernetztes Poly(methylmethacrylat) ist.

10. Verfahren nach einem der Ansprüche 7 bis 9, wobei das vernetzte Acrylharz einen Brechungsindex von 1,45 bis 1,55 aufweist.

11. Verfahren nach einem der Ansprüche 7 bis 10, wobei die Folie eine Dicke von 300 µm oder weniger aufweist.

## Revendications

1. Composition de résine de polypropylène, qui comprend :
(A) 100 parties en poids de particules de polymère de propylène ayant un diamètre moyen de particule de 500 à 3 000 µm et contenant des particules fines ayant un diamètre de 300 µm ou moins à raison de 5 % en poids ou moins ; et
(B) 0,05 à 25 parties en poids d'une poudre de résine acrylique réticulée ayant un diamètre moyen de particule de 0,7 à 10 µm.

2. Composition selon la revendication 1, dans laquelle la résine acrylique réticulée est un poly(méthacrylate de méthyle) réticulé.

3. Composition selon la revendication 1 ou 2, dans laquelle la poudre de résine acrylique réticulée va de 1 à 25 parties en poids.

4. Composition selon l'une quelconque des revendications 1 à 3, dans laquelle le polymère de propylène est choisi dans le groupe constitué par un homopolymère de propylène et un copolymère de propylène avec au moins une α-oléfine autre que le propylène, ayant jusqu'à 10 atomes de carbone.

5. Composition selon l'une quelconque des revendications 1 à 4, dans laquelle la résine acrylique réticulée a un indice de réfraction de 1,45 à 1,55.

6. Utilisation d'une composition selon l'une quelconque des revendications 1 à 5 pour fabriquer un film.

7. Procédé de préparation d'un film de résine de polypropylène, comprenant les étapes consistant à :
(1) mélanger (A) 100 parties en poids de particules d'au moins un polymère de propylène qui ont un diamètre moyen de particule de 500 à 3 000 µm et contiennent des particules fines ayant un diamètre de 300 µm ou moins à raison de 5% en poids ou moins et (B) 0,05 à 0,5 partie en poids d'une poudre de résine acrylique réticulée ayant un diamètre moyen de particule de 0,7 à 10 µm, pour obtenir une composition de résine de polypropylène, et
(2) façonner la composition en un film de résine de polypropylène.

8. Procédé selon la revendication 7, dans lequel l'étape (1) inclut les étapes consistant à :
(i) mélanger (A) 100 parties en poids de particules de polymère de propylène et (B) 1,0 à 25 parties en poids de la poudre de résine acrylique réticulée pour obtenir une composition de mélange maître, et
(ii) diluer la composition de mélange maître avec des particules de polymère de propylène pour obtenir une composition de résine de polypropylène comprenant (A) 100 parties en poids de particules d'au moins un polymère de propylène et (B) 0,05 à 0,5 partie en poids de la poudre de résine acrylique réticulée, les particules de polymère de propylène utilisées dans l'étape (i) et les particules de polymère de propylène utilisées dans l'étape (ii) pouvant être identiques ou différentes.

9. Procédé selon la revendication 7 ou 8, dans lequel la résine acrylique réticulée est un poly(méthacrylate de méthyle) réticulé.

10. Procédé selon l'une quelconque des revendications 7 à 9, dans lequel la résine acrylique réticulée a un indice de réfraction de 1,45 à 1,55.

11. Procédé selon l'une quelconque des revendications 7 à 10, dans lequel le film a une épaisseur de 300 µm ou moins.
